# EUROPÄISCHE PATENTSCHRIFT

(11) **EP 1 714 742 B1**
(45) Veröffentlichungstag und Bekanntmachung des Hinweises auf die Patenterteilung: **26.11.2008**
(21) Anmeldenummer: 05008721.2
(22) Anmeldetag: 21.04.2005
(51) Int. Cl.: B24C 3/18, B24C 9/00, B24C 3/14

(54) **Schleuderstrahlanlage zum Strahlen von Werkstücken aus Leichtmetalllegierungen**
Abrasive throwing wheel apparatus for blasting light metal alloy workpieces
Dispositif avec turbine abrasive pour le sablage de pièces en alliage de métaux légers

(43) Veröffentlichungstag der Anmeldung: 25.10.2006
(73) Patentinhaber: DISA Industrie AG, 8207 Schaffhausen (CH)
(72) Erfinder: Indlekofer, Markus, 79771 Klettgau (DE)
(74) Vertreter: Weiss, Wolfgang

(56) Entgegenhaltungen:
- EP-A- 0 145 851
- EP-A- 0 248 096
- CH-A- 374 901
- US-A- 3 690 066
- US-A- 4 456 293
- US-A- 5 590 703
- PATENT ABSTRACTS OF JAPAN Bd. 1998, Nr. 10, 31. August 1998 (1998-08-31) -& JP 10 118935 A (SINTOKOGIO LTD), 12. Mai 1998 (1998-05-12)
- PATENT ABSTRACTS OF JAPAN Bd. 016, Nr. 474 (M-1319), 2. Oktober 1992 (1992-10-02) -& JP 04 171177 A (PUROGURESU:KK), 18. Juni 1992 (1992-06-18)

## Beschreibung

Die Erfindung bezieht sich auf eine Schleuderstrahlanlage zum Strahlen von Werkstücken aus Leichtmetalllegierungen, bestehend aus mindestens einer Strahlkammer zur Aufnahme der zu strahlenden Werkstücke, mindestens zwei in Wänden der Strahlkammer angeordneten Schleuderrädern zum Einbringen eines Strahlmittels in die Strahlkammer und einem Separator zum Trennen des Strahlmittel-Strahlabtragsgemisches.

Um möglichst viel Gewicht einzusparen werden im Kraftfahrzeugbau vermehrt Gusswerkstücke aus Leichtmetalllegierungen, insbesondere aus Aluminium- und Magnesiumlegierungen hergestellt. Die Werkstücke, die in Kokillen- oder Sandgussverfahren hergestellt werden, müssen nach dem Giessen entgratet und gereinigt werden. Nach dem Giessvorgang zeigen die Werkstücke oft eine ungleichmässig und uneinheitliche Aussenfläche. Um das Aussehen der Werkstücke zu verbessern, müssen die Aussenflächen geschliffen, poliert und/oder gestrahlt werden. Das Abstrahlen mit teilchenförmigen Strahlmitteln kann auch angewendet werden um die physikalische Struktur an der Oberfläche des Gusswerkstückes zu verändern. So kann beispielsweise das Gusswerkstück an der Oberfläche verdichtet, oder gehärtet werden und abriebfester oder gleitfähiger gemacht werden.

Aus der US 5014469 ist eine Strahlanlage bestehend aus einer Strahlkammer mit zwei Schleuderrädern, einer Expansionskammer, einer Förderanlage und einem Separator bekannt. Die Werkstücke, die in der Strahlkammer gestrahlt werden, sind Platten oder Bleche, die über eine Rollenbahn durch die Strahlkammer geführt werden. Das Gemisch aus Strahlmittel und Strahlabtrag wird von der Oberfläche des Werkstückes weggeblasen und über ein Umlenkblech in einem Raum mit einer Förderanlage zugeführt. Beim Herunterfallen vom Umlenkblech wird das Gemisch ein erstes Mal in einem Strom mit gröberem, schwererem Material und einem Strom mit feinerem, leichterem Material getrennt. Das schwerere Material wird über die Förderanlage einem zusätzlichen Separator zugeführt. Im Separator, der oberhalb von der Strahlkammer angeordnet ist, wird die zweite eigentliche Abtrennung des Strahlmittels durchgeführt. Das leichtere Material wird von einem Gebläse über eine Expansionskammer in einem Trennzyklon und einem Staubfänger abgesaugt bzw. abgetrennt.

Dokument EP 0145 851 zeigt eine Schleuderstrahlanlage gemäß dem Oberbegriff von Anspruch 1.

Ausgehend von diesem Stand der Technik ist es Aufgabe der Erfindung, eine Schleuderstrahlanlage anzugeben, die möglichst einfach aufgebaut ist und insbesondere für Werkstücke aus Magnesiumlegierungen eine möglichst sichere Betriebsweise gewährleistet.

Diese Aufgabe wird gelöst durch eine Schleuderstrahlanlage zum Strahlen von Werkstücken aus Leichtmetalllegierungen gemäß Anspruch 1.

Bevorzugte Weiterbildungen der Erfindung ergeben sich aus den abhängigen Ansprüchen.

Es ist von Vorteil, dass die Gusswerkstücke möglichst gleichmässig auf allen Seiten mit dem Strahlmittel abgestrahlt werden kann. Dies wird dadurch erreicht, dass der Manipulator als einen Greifer mit drei Bewegungsrichtungen ausgebildet ist. Dies wird auch dadurch erreicht, dass der Greifer mit Servomotoren und Pneumatikzylinder ausgebildet ist. Die Servomotoren des Greifers sind mit einem Computersystem zur Steuerung sämtlicher Bewegungen des Werkstückes verbunden. Durch die Computersteuerung wird erreicht, dass die Bereiche des Werkstückes, die eine intensivere Strahlmitteleinwirkung benötigen, länger im Strahlmittel verweilen können als die übrigen Bereiche.

Es ist auch von Vorteil, dass die Strahlanlage möglichst ohne Handarbeit bedient werden kann. Dies wird dadurch erreicht, dass ein Belade- bzw. Entladeroboter zum Beladen und Entladen der zu strahlenden Werkstücke in bzw. aus die Strahlkammer angeordnet ist.

Es ist weiter auch von Vorteil, dass der Magnesiumstaub, der als Strahlabtrag anfällt, eine möglichst kurze Verweilzeit in der Strahlanlage hat und dass die Bildung von explosiven Gemischen in der Strahlanlage verhindert wird. Dies wird dadurch erreicht, dass der Separator unmittelbar unter der Strahlkammer, d.h. am Ausgang für das gebrauchte Strahlmittel, angeordnet ist. Der Separator ist ohne Räume und Flächen, die bei den herrschenden strömungsdynamischen Verhältnissen Ablagerungen des Magnesiumstaubes begünstigen, ausgebildet. Dies wird auch dadurch erreicht, dass der Separator ein Staublech mit einer Breite entsprechend der Breite der Strahlkammer aufweist.

Ein Ausführungsbeispiel der Erfindung wird anhand der Figuren beschrieben. Es zeigen:
Figur 1 eine perspektivische Sicht auf eine erfindungsgemässe Schleuderstrahlanlage,
Figur 2 eine Seitenansicht auf die Strahlanlage von Figur 1,
Figur 3 eine weitere Seitenansicht auf die Strahlanlage von Figur 1,
Figur 4 eine perspektivische Sicht auf dem Separator der Strahlanlage von Figur 1,
Figur 5 eine weitere perspektivische Sicht auf dem Separator der Strahlanlage von Figur 1,
Figur 6 eine perspektivische Sicht in die Strahlkammer der Strahlanlage von Figur 1 und
Figur 7 eine weitere Sicht in die Strahlkammer der Strahlanlage von Figur 1.

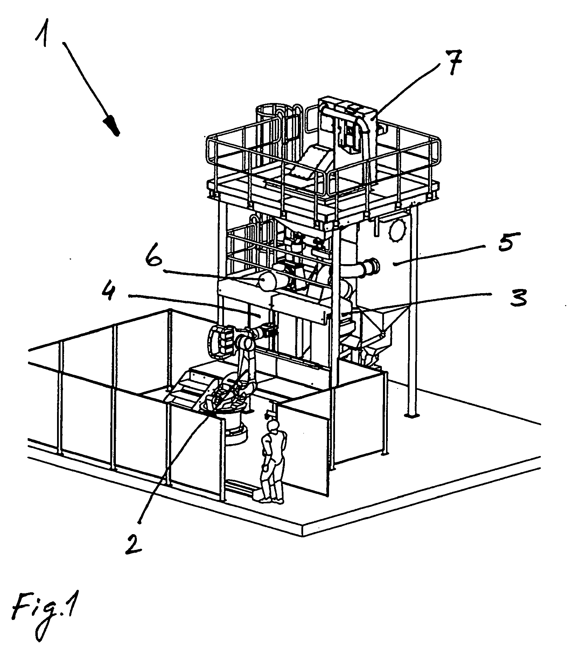

In Figur 1 ist eine Schleuderstrahlanlage 1 zum Strahlen von Werkstücken aus Leichtmetalllegierungen, insbesondere zum Strahlen von Gusswerkstücken aus Magnesiumlegierungen dargestellt. Die Anlage 1 umfasst eine Belade- und Entladeroboter 2, eine Strahlkammer 3 und eine Schiebetüre 4, die als Zugang zur eigentlichen Strahlkammer 3 dient, ein Sammelkasten 5 für sämtliche Luft und Strahlmittel führenden Rohrleitungen der Strahlanlage, mindestens zwei Schleuderräder 6 und ein Becherwerk 7, mit dem das Strahlmittel zu den Schleuderrädern 6 zurückgeführt wird. Die gesamte Strahlanlage 1 erstreckt sich, wie aus Figur 1 ersichtlich über mehreren Stockwerken.

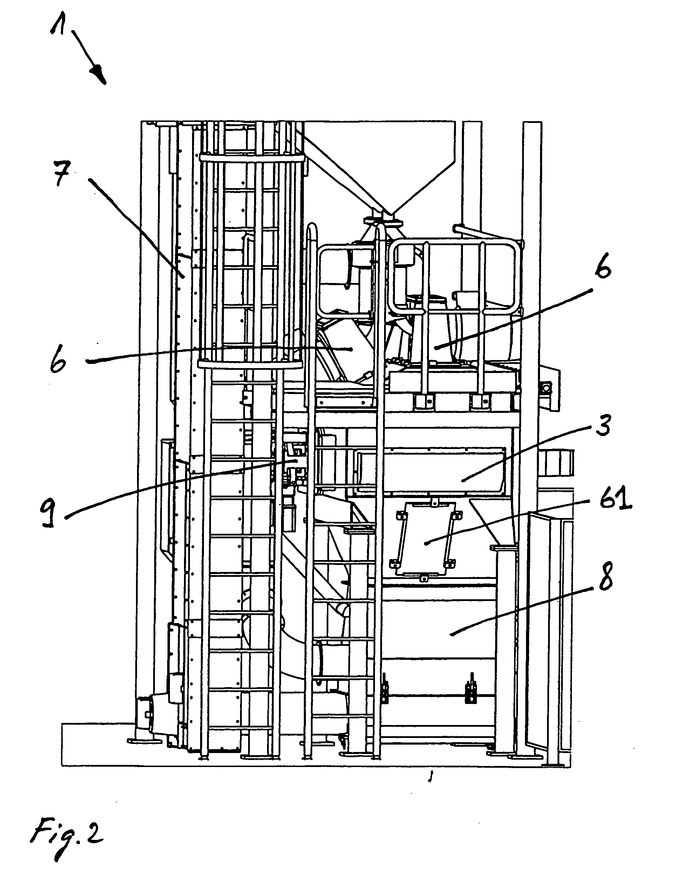

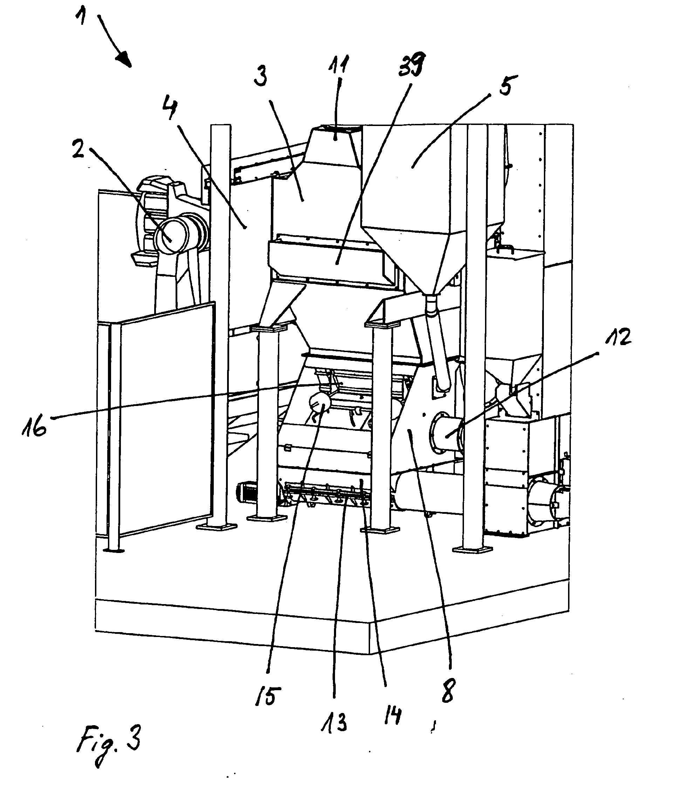

In den Figuren 2 und 3 ist die gleiche Strahlanlage 1 von Figur 1 im Detail dargestellt. In Figur 2 ist die Strahlanlage 1 in einer Seitenansicht dargestellt. Ausser dem Becherwerk 7 und den Schleuderrädern 6 ist in Figur 2 gut ersichtlich, wie unmittelbar unterhalb der Strahlkammer 3 einen Separator 8 angeordnet ist. Auf der Rückseite der Strahlkammer 3 ist ein Antrieb 9 ersichtlich, der zum Antreiben eines Greifers 10 zum Handhaben der Gusswerkstücke innerhalb der Strahlkammer dient.

In Figur 3 ist der untere Teil der Strahlanlage 1 mit dem Separator 8 dargestellt. Figur 3 zeigt die Strahlanlage 1 von der Seite, die der Seite von Figur 2 gegenüberliegt. Oberhalb der Strahlkammer 3 ist eine Absaugung 11 zum Absaugen der Luft, die über einen Ansaugkasten 39 und andere Öffnungen sowie mit dem Strahlmittel über die Schleuderräder 6 in die Strahlkammer 3 eingebracht wird. An einer Seitenwand des Separators 8 ist ein weiteres Absaugrohr 12 angeordnet, das zum Absaugen der Hauptanteil der Luftmenge aus der Strahlanlage 1 dient. Unterhalb des Separators 8, in dem das Gemisch aus Metallabtrag und Strahlmittel getrennt wird, ist auch eine Förderschnecke 13 ersichtlich, die zur Förderung des gereinigten Strahlmittels aus dem Separator 8 dient.

Wenn die zu strahlenden Gusswerkstücke aus Leichtmetalllegierungen, insbesondere aus Magnesiumlegierungen hergestellt sind, soll verhindert werden, dass Ablagerungen von Magnesiumstaub auftreten. Die Förderschnecke 13 weist eine abklappbare und zweigeteilte Aussenwand 14 auf, damit die Kontrolle und die Reinigung der Förderschnecke 13 möglichst einfach durchgeführt werden kann. Der untere Teil der zweiteiligen Aussenwand 14 ist in Figur 3 erkennbar.

In der Fig. 3 ist auch ein Gegengewicht 15 und eine Wippe 16 ersichtlich, die mit dem Gegengewicht 15 zusammen wirkend angeordnet ist. Das Gegengewicht 15 dient dazu um die Feststoffzufuhr, hier das Gemisch aus Metallstaub und Strahlmittel, zum Windsichter regeln zu können. Die Abdeckbleche des Separators 8 können mit wenigen Handgriffen entfernt werden, was die Kontrolle auf Ablagerungen und die Reinigung des Separators 8 erleichtert.

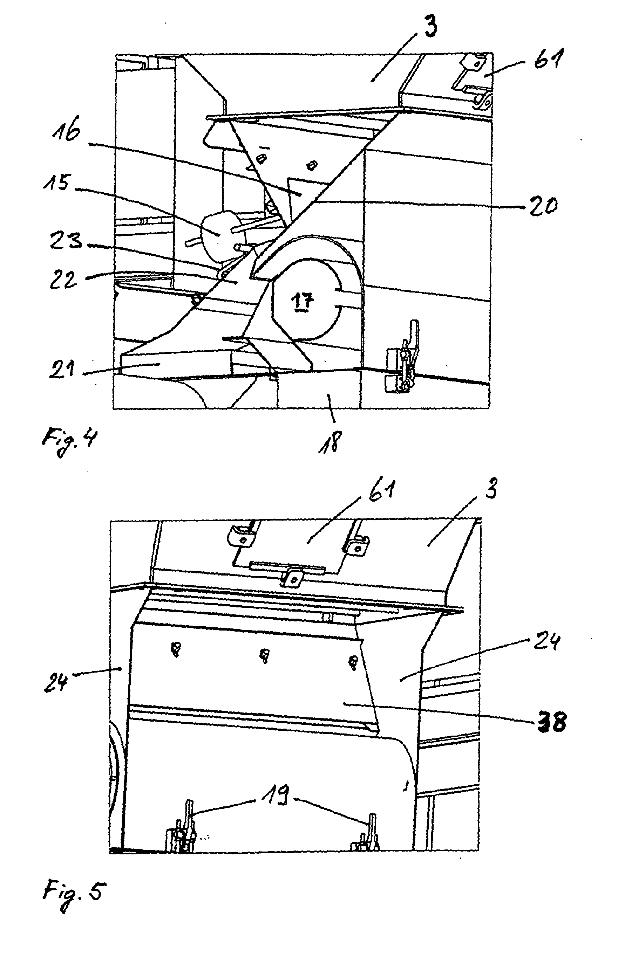

In den Figuren 4 und 5 ist der Separator 8 im Detail perspektivisch und teilweise geschnitten dargestellt. Die Hauptluftmenge wird aus dem Separator 8 bei 17 abgesaugt. Unter dem Separator 8 ist ein Kasten 18 angeordnet, in der eventuell mitgerissenen Grobteile aufgefangen werden. Dieser Kasten 18 ist mit Spannhaken 19 am Separator 8 befestigt, wodurch die Reinigung und die Kontrolle des Separators 8 vereinfacht wird. Die Hauptfraktion des Strahlmittels und die groben Leichtmetall- oder Magnesiumteile, die durch den Strahlvorgang vom Gusswerkstück abgetragen werden, fallen von einem Staublech 20 auf ein Sieb 21. Die Wippe 16 und das Gegengewicht 15 dienen zur Einstellung der Strömungsbedingungen im Separator 8. Je grösser der Spalt zwischen Wippe 16 und Staublech 20 ist, desto kleiner wird die Strömungsgeschwindigkeit im Spalt.

Das Staublech 20 ist zwischen zwei Seitenwänden 24 des Separators 8 angeordnet und weist die gleiche Breite auf wie die Breite des Separators 8 und der Strahlkammer 3. In Figur 5 ist weiterhin ein einstellbarer Stauschieber 38 ersichtlich, mit der der Spalt zwischen Wippe 16 und Staublech 20 grob voreingestellt werden kann. Der Separator 8 ist weiterhin leicht zu öffnen und zu kontrollieren durch ein abnehmbarer Deckel 22 mit Handgriffen 23.

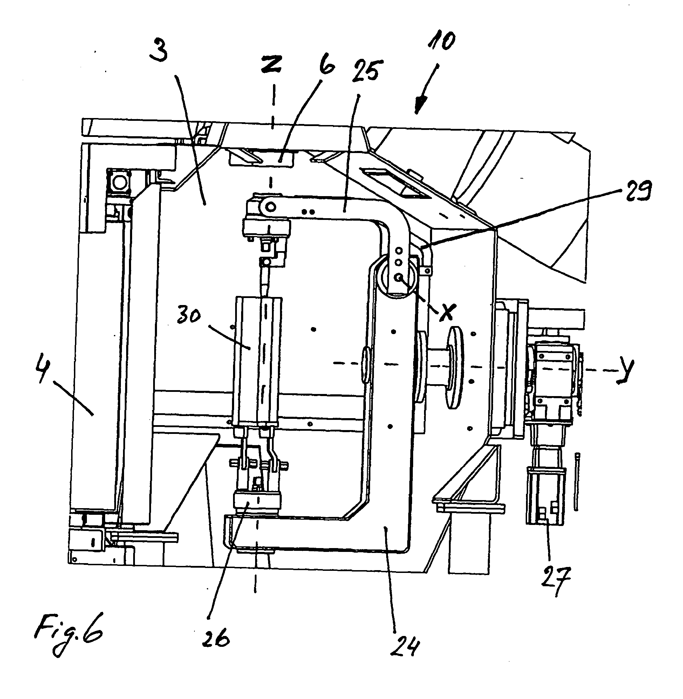

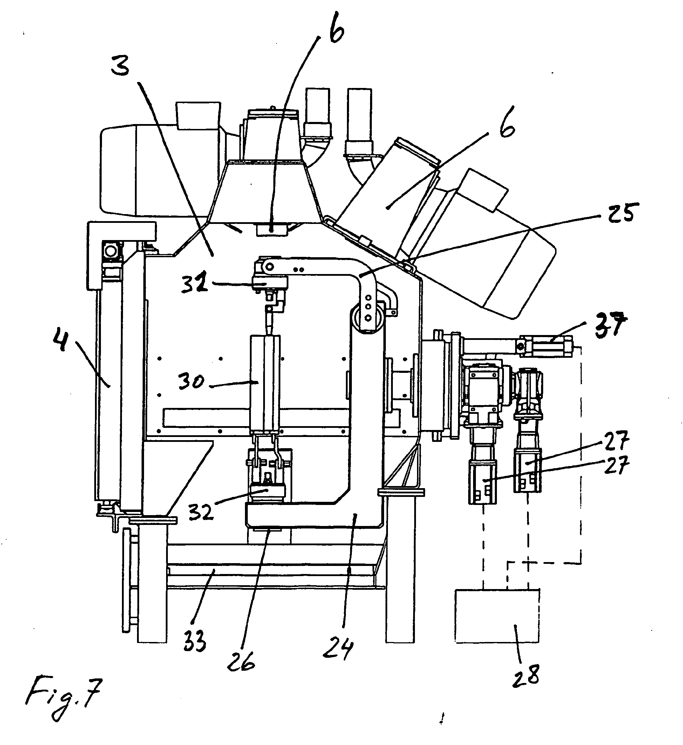

In den Figuren 6 und 7 ist die Strahlkammer 3 mit dem Greifer 10 perspektivisch und in seitlicher Ansicht im Detail dargestellt. Der Greifer 10 besteht aus einem Dreharm 24, einem Schwenkarm 25 und einer Spann- und Drehvorrichtung 26. Für die Drehbewegungen des Greifers 10 werden Servomotoren 27 eingesetzt, die in Figur 7 besser ersichtlich sind. Die Servomotoren 27 werden alle über einen Computer 28 angesteuert, wodurch eine positionsgenaue Bewegung des Dreharmes 24 und der Spann- und Drehvorrichtung 26 ermöglicht wird. Der Dreharm 24 ist im wesentlichen L-förmig und inwendig hohl. Der Dreharm 24 ist drehbar um die Y-Achse. Der Schwenkarm 25 ist schwenkbar um die X-Achse mit dem Dreharm 24 verbunden. Die Schwenkbewegung des Schwenkarmes 25 erfolgt durch einen Pneumatikzylinder 37, der entgegen der Schliesskraft einer Feder 29 wirkt, die dafür sorgt, dass das Gusswerkstück, hier schematisch durch einen Quader 30 dargestellt im Greifer 10 festgehalten wird.

Das Gusswerkstück wird eingespannt zwischen einem am Schwenkarm 25 angeordneten oberen Drehlager 31 und einem weiteren am Dreharm 24 angeordneten unteren Drehlager 32. Die Drehlager 31,32 ermöglichen eine Drehbewegung des Gusswerkstückes um die Z-Achse. Das untere Drehlager 32 wird über Riementriebe, die im Hohlraum des Dreharmes 24 angeordnet sind, vom Servomotor 27 angetrieben.

In Figur 7 ist auch ein Prallblech 33 ersichtlich, dass am Ausgang der Strahlkammer 3 zum Separator 8 angeordnet ist. Die Prallbleche 33 sind von einander beabstandet und jeweils unter einem Winkel von 45° zur Falllinie angeordnet und dienen um das hinunter fliegende Strahlmittel abzufangen und um den Separator, der unterhalb der Strahlkammer angeordnet ist, vor Abnutzung zu schützen.

Durch die mittels Computer 28 ansteuerbaren Servomotoren 27 und Pneumatikzylindern 37 kann das Gusswerkstück 30 während des Strahlvorganges in jeder Position zum Strahlmittel gebracht und wenn gewünscht über kürzere oder längere Zeit gehalten werden. Durch die Verwendung einer Computersteuerung zusammen mit den Servomotoren 27 wird erreicht, dass die Bereiche des Gusswerkstückes, die eine intensivere Bearbeitung mit dem Strahlmittel erfordern, genau in den Strahlmittelstrahl gebracht und gehalten werden können. Der Greifer 10 ist so konzipiert, dass er möglichst wenig Strahlschatten auf das Werkstück erzeugt und so für eine optimale Reinigung des Gusswerkstückes Gewähr leistet. Ein drittes Schleuderrad 6 kann als Option an Stelle der Platte 61 in dem Boden der Strahlkammer befestigt werden. Hiermit kann das zu strahlende Werkstück 30 unter einem weiteren Winkel angestrahlt werden.

Der Separator 8 ist so ausgelegt, dass Staubansammlungen verhindert werden und die Strömungsverhältnisse werden so eingestellt, dass verhindert wird, dass explosive, zündfähige Gemische entstehen können. Die Strahlkammer 3 wird über einen Belade- und Entladeroboter 2 bedient, die die Gusswerkstücke 30 durch die Schiebetüre 4 in die Strahlkammer einbringt, am Greifer 10 übergibt und nach dem Strahlprozess wieder herausnimmt.

Die Strahlanlage 1 zeichnet sich aus durch eine hohelSicherheit gegen Explosionen von Metall- insbesondere Magnesiumstäuben und durch eine leichte Reinigbarkeit. Dies wird erreicht durch die gute Zugänglichkeit sämtlicher Innenräume der Anlage. Die Innenräume und die Innenflächen des Separators 8 und der Strahlkammer 3 sind strömungsdynamisch günstig konstruiert, damit verhindert wird, dass Staubablagerungen gebildet werden. Dies wird beispielsweise erreicht durch abgerundete Eckbereiche und durch Raum- und Leitungsquerschnitte, die der Strömungsdynamik des Strahlmittel-Staubgemisches angepasst sind. Beim Strahlen von Magnesiumgussteilen wird Aluminium als Strahlmittel verwendet.

## Patentansprüche

1. Schleuderstrahlanlage (1) zum Strahlen von Werkstücken (30) aus Leichtmetalllegierungen, bestehend aus mindestens einer Strahlkammer (3) zur Aufnahme der zu strahlenden Werkstücke, mindestens zwei in Wänden der Strahlkammer angeordneten Schleuderrädern (6) zum Einbringen eines Strahlmittels in die Strahlkammer und einem Separator (8) zum Trennen des Strahlmittel-Strahlabtragsgemisches wobei der Separator (8) unmittelbar unter der Strahlkammer (3) angeordnet ist, wobei in der Strahlkammer ein Manipulator (10) zum Handhaben des Gusswerkstückes (30) während des Strahlens angeordnet ist **und** die Innenräume und Innenflächen des Separators (8) und der Strahlkammer (3) strömungsdynamisch derart ausgebildet sind, dass bei den herrschenden strömungsdynamischen Verhältnissen Ablagerungen des Metallstaubes verhindert werden, **dadurch gekennzeichnet, dass** der Separator (8) ein Staublech (20) mit einer Breite (B) entsprechend der Breite (X) der Strahlkammer (3) aufweist sowie eine Wippe (16) mit einem Gegengewicht (15) und ein einstellbarer Stauschieber (38) zur Einstellung der Strömungsgeschwindigkeit zwischen Staublech (20) und Wippe (16)

2. Schleuderstrahlanlage (1) nach dem Anspruch 1, **dadurch gekennzeichnet, dass** der Manipulator (10) als ein Greifer (30) mit drei Bewegungsrichtungen ausgebildet ist.

3. Schleuderstrahlanlage (1) nach einem der Ansprüche 1 oder 2, **dadurch gekennzeichnet, dass** der Greifer (30) mit Servomotoren (27) und Pneumatikzylinder (37) ausgebildet ist.

4. Schleuderstrahlanlage (1) nach einem der Ansprüche 1 bis 3, **dadurch gekennzeichnet, dass** der Greifer (10) mit einem Computersystem (28) zur Steuerung sämtlicher Bewegungen des Werkstückes (30) verbunden ist.

5. Schleuderstrahlanlage (1) nach einem der Ansprüche 1 bis 4, **dadurch gekennzeichnet, dass** ein computergesteuerter Servomotor (27) zur Bewegung des Werkstückes um eine waagrechte Achse (Y) vorgesehen ist.

6. Schleuderstrahlanlage (1) nach einem der Ansprüche 1 bis 5, **dadurch gekennzeichnet, dass** ein computergesteuerter Servomotor (27) zur Bewegung des Werkstückes um eine senkrechte Achse (Z) vorgesehen ist.

7. Schleuderstrahlanlage (1) nach einem der Ansprüche 1 bis 6, **dadurch gekennzeichnet, dass** die zu strahlenden Werkstücke (30) aus Magnesiumlegierungen ausgebildet sind.

8. Schleuderstrahlanlage (1) nach einem der Ansprüche 1 bis 8, **dadurch gekennzeichnet, dass** ein Belade- bzw. Entladeroboter (2) zum Beladen und Entladen der zu strahlenden Werkstücke (30) in bzw. aus die Strahlkammer (3) angeordnet ist.

## Claims

1. Shot-blasting installation (1) for blasting workpieces (30) made from light metal alloys, comprising at least one blasting chamber (3) for receiving the workpieces that are to be blasted, at least two blasting wheels (6) arranged in walls of the blasting chamber for introducing a blasting agent into the blasting chamber, and a separator (8) for separating the mixture of blasting agent and material that has been removed by blasting, the separator (8) being arranged directly beneath the blasting chamber (3), a manipulator (10) for handling the cast workpiece (30) during blasting being arranged in the blasting chamber and the interior spaces and inner surfaces of the separator (8) and of the blasting chamber (9) being formed in such a manner in terms of fluid dynamics that accumulations of the metal dust are prevented under the prevailing fluid-dynamic conditions, **characterized in that** the separator (8) has a baffle plate (20) with a width (B) corresponding to the width (X) of the blasting chamber (3) as well as a rocker (16) with a counterweight (15) and an adjustable baffle slide (38) for setting the flow rate between the baffle plate (20) and the rocker (16).

2. Shot-blasting installation (1) according to Claim 1, **characterized in that** the manipulator (10) is designed as a gripper (30) with three directions of movement.

3. Shot-blasting installation (1) according to either of Claims 1 and 2, **characterized in that** the gripper (30) is formed with servomotors (27) and pneumatic cylinders (37).

4. Shot-blasting installation (1) according to one of Claims 1 to 3, **characterized in that** the gripper (10) is connected to a computer system (28) for controlling all the movements of the workpiece (30).

5. Shot-blasting installation (1) according to one of Claims 1 to 4, **characterized in that** a computer-controlled servomotor (27) is provided for moving the workpiece about a horizontal axis (Y).

6. Shot-blasting installation (1) according to one of Claims 1 to 5, **characterized in that** a computer-controlled servomotor (27) is provided for moving the workpiece about a vertical axis (Z).

7. Shot-blasting installation (1) according to one of Claims 1 to 6, **characterized in that** the workpieces (30) that are to be blasted are formed from magnesium alloys.

8. Shot-blasting installation (1) according to one of Claims 1 to 8, **characterized in that** a loading and unloading robot (2) is arranged so as to load and unload the workpieces (30) that are to be blasted into and from the blasting chamber (3).

## Revendications

1. Installation de sablage à turbine (1) pour le sablage de pièces (30) en alliages de métaux légers, constituée d'au moins une chambre de sablage (3) destinée à recevoir les pièces à sabler, d'au moins deux roues de sablage (6) disposées dans des parois de la chambre de sablage, destinées à introduire un agent de sablage dans la chambre de sablage, et d'un séparateur (8) destiné à séparer le mélange d'agent de sablage et de débris de sablage, le séparateur (8) étant disposé directement sous la chambre de sablage (3), un manipulateur (10) étant disposé dans la chambre de sablage pour manipuler la pièce en fonte (30) pendant le sablage et les espaces intérieurs et les surfaces intérieures du séparateur (8) et de la chambre de sablage (3) étant réalisés du point de vue de la dynamique de l'écoulement de telle sorte que dans les conditions dynamiques d'écoulement régnant, des dépôts de poussière métallique soient évités, **caractérisée en ce que** le séparateur (8) présente une tôle de retenue (20) ayant une largeur (B) correspondant à la largeur (X) de la chambre de sablage (3), ainsi qu'une bascule (16) avec un contrepoids (15) et un tiroir de retenue ajustable (38) pour ajuster la vitesse d'écoulement entre la tôle de retenue (20) et la bascule (16).

2. Installation de sablage à turbine (1) selon la revendication 1, **caractérisée en ce que** le manipulateur (10) est réalisé sous forme de dispositif de préhension (10) avec trois directions de déplacement.

3. Installation de sablage à turbine (1) selon l'une quelconque des revendications 1 ou 2, **caractérisée en ce que** le dispositif de préhension (10) est réalisé avec des servomoteurs (27) et des cylindres pneumatiques (37).

4. Installation de sablage à turbine (1) selon l'une quelconque des revendications 1 à 3, **caractérisée en ce que** le dispositif de préhension (10) est raccordé à un système d'ordinateur (28) pour commander tous les mouvements de la pièce (30).

5. Installation de sablage à turbine (1) selon l'une quelconque des revendications 1 à 4, **caractérisée en ce qu'**il est prévu un servomoteur (27) à commande par ordinateur pour le déplacement de la pièce autour d'un axe horizontal (Y).

6. Installation de sablage à turbine (1) selon l'une quelconque des revendications 1 à 5, **caractérisée en ce qu'**il est prévu un servomoteur (27) à commande par ordinateur pour le déplacement de la pièce autour d'un axe vertical (Z).

7. Installation de sablage à turbine (1) selon l'une quelconque des revendications 1 à 6, **caractérisée en ce que** les pièces à sabler (30) sont réalisées en alliages de magnésium.

8. Installation de sablage à turbine (1) selon l'une quelconque des revendications 1 à 8, **caractérisée en ce qu'**un robot de chargement ou de déchargement (2) pour charger et décharger les pièces à sabler (30) est disposé dans ou hors de la chambre de sablage (3).
